# EUROPEAN PATENT APPLICATION

(11) **EP 2 650 263 A1**
(43) Date of publication of application: **16.10.2013**
(21) Application number: 13001015.0
(22) Date of filing: 28.02.2013
(51) Int. Cl.: C03C 8/18, H01B 1/22

(54) **Low silver content paste composition and method of making a conductive film therefrom**

(30) Priority: 26.03.2012 US 201261615608 P; 22.01.2013 US 201313746796
(71) Applicant: Heraeus Precious Metals North America Conshohocken LLC, West Conshohocken, PA 19428 (US)
(72) Inventor: Sgriccia, Matthew, Douglassville, 19518 (US); Challingsworth, Mark, Glenside, 19308 (US); Tredinnick, Margaret, Paoli, 19301 (US); Hargrove, Douglas, Plymouth Meeting, 19462 (US); Malanga, David, Harleysville, 19438 (US)
(74) Representative: Brand, Normen

(57) **Abstract**

An electroconductive paste composition is provided. The electroconductive paste composition includes electroconductive metal particles, glass powder, at least one metal oxide powder and an organic vehicle. The electroconductive metal particles include at least one of silver coated metal powder and silver coated metal flake and at least one of uncoated silver powder and uncoated silver flake. In use, the paste is deposited on a specified substrate and fired in an ambient air environment.

## Description

### CROSS-REFERENCE TO RELATED APPLICATIONS

This application claims the benefit of U.S. Provisional Patent Application No. 61/615,608, filed March 26, 2012, the entire contents of which are incorporated by reference herein.

### BACKGROUND OF THE INVENTION

Electrically conductive pastes, more particularly thick film electrically conductive pastes, are often utilized for the manufacturing of electronic circuits, passive components, solar cells, fuel cells, sensors, and the like. Some particular applications of such electrically conductive pastes are for coating portions of passive components, such as for the formation of end terminations, and for printing conductive layers or patterns on circuit boards. Typical silver-based conductive pastes used for such purposes comprise silver powder and/or flake, metal oxide, glass powder (glass particles), and an organic vehicle. The total silver content and total solids content (i.e., the inorganic components) of these pastes must be high enough to ensure that the resulting conductive layer will densify and bond or adhere to the underlying substrate, while also producing the desired electrical properties.

However, such conventional silver pastes are often costly to produce because of the large amount of pure silver required to achieve the total solids content typically necessary for such pastes. Accordingly, it would be beneficial to provide an electrically conductive paste that is fired in an ambient air environment and has a relatively low silver content, but which exhibits a magnitude of adhesion and electrical properties similar to those achieved by conductive pastes having high silver contents.

### BRIEF SUMMARY OF THE INVENTION

One preferred embodiment of the present invention is directed to an electroconductive paste composition which comprises electroconductive metal particles, glass powder, at least one metal oxide powder, and an organic vehicle. The electroconductive metal particles include at least one of silver coated metal powder and silver coated metal flake and at least one of uncoated silver powder and uncoated silver flake.

Another preferred embodiment of the present invention relates to a method of forming an end termination on a passive component. The method comprises the steps of coating an electroconductive paste composition on a surface of the passive component and firing the coated passive component in an ambient air environment at a temperature in a range of 400°C to 900°C. The electroconductive paste composition comprises at least one of silver coated metal powder and silver coated metal flake, at least one of uncoated silver powder and uncoated silver flake, glass powder, at least one metal oxide powder and an organic vehicle.

Another preferred embodiment of the present invention relates to a termination paste composition comprising at least one of silver coated copper powder and silver coated copper flake in an amount of 15% to 40% by weight based on a total weight of the composition, at least one of uncoated silver powder and uncoated silver flake in an amount of 30% to 65% by weight based on a total weight of the composition, glass powder in an amount of 2% to 5% by weight based on a total weight of the composition, and an organic vehicle in an amount of 10% to 30% by weight based on a total weight of the composition. A total silver content of the paste composition is 50% to 70% by weight based on the total weight of the composition and a total solids content of the composition is 70% to 90% by weight based on a total weight of the composition.

Another preferred embodiment of the present invention relates to a passive component having an end termination formed from a paste composition. The paste composition comprises electroconductive metal particles, glass powder, at least one metal oxide powder, and an organic vehicle.

The electroconductive metal particles include at least one of silver coated metal powder and silver coated metal flake and at least one of uncoated silver powder and uncoated silver flake.

### BRIEF DESCRIPTION OF THE DRAWINGS

The foregoing summary, as well as the following detailed description of preferred embodiments of the present invention, will be better understood when read in conjunction with the appended drawings. For the purpose of illustration, there are shown in the drawings embodiments which are presently preferred. It should be understood, however, that the device and method are not limited to the precise arrangements and instrumentalities shown.

In the drawings:
Fig. 1A is a SEM photograph of a 30% silver coated copper powder to an embodiment of the invention;
Fig. 1B is an EDX spectrum scan of a 30% silver coated copper powder to an embodiment of the invention;
Fig. 2A is a SEM photograph of a 30% silver coated copper flake to an embodiment of the invention;
Fig. 2B is an EDX spectrum scan of a 30% silver coated copper flake to an embodiment of the invention;
Fig. 3 is a typical firing curve for a peak firing temperature of 780°C for a composition according to an embodiment of the invention;
Fig. 4A is a cross-sectional view of an end termination on a first multi-layer capacitor chip body (Chip 1) coated with a 53% silver content paste (Paste A) according to an embodiment of the invention;
Fig. 4B is a cross-sectional view of an end termination on the first multi-layer capacitor chip body (Chip 1) coated with a 65% silver content paste (Paste B) according to an embodiment of the invention;
Fig. 5A is a cross-sectional view of an end termination on a multi-layer varistor chip body (Chip 2) coated with a 53% silver content paste (Paste A) according to an embodiment of the invention;
Fig. 5B is a cross-sectional view of an end termination on the multi-layer varistor chip body (Chip 2) coated with a 65% silver content paste (Paste B) according to an embodiment of the invention;
Fig. 6A is a cross-sectional view of an end termination on an inductor chip body (Chip 3) coated with a 53% silver content paste (Paste A) according to an embodiment of the invention;
Fig. 6B is a cross-sectional view of an end termination on the inductor chip body (Chip 3) coated with a 65% silver content paste (Paste B) according to an embodiment of the invention;
Fig. 7A is a cross-sectional view of an end termination on a second multi-layer capacitor chip body (Chip 4) coated with a 53% silver content paste (Paste A) according to an embodiment of the invention;
Fig. 7B is a cross-sectional view of an end termination on the second multi-layer capacitor chip body (Chip 4) coated with a 65% silver content paste (Paste B) according to an embodiment of the invention;
Fig. 7C is a SEM enlarged cross-sectional view of the end termination on the second multi-layer capacitor chip body (Chip 4) shown in Fig. 7B;
Fig. 7D is a SEM enlarged cross-sectional view of a corner of the end termination on the second multi-layer capacitor chip body (Chip 4) shown in Fig. 7B;
Fig. 7E a SEM enlarged cross-sectional view of the Nickel/Tin plating layer on the end termination on the second multi-layer capacitor chip body (Chip 4) shown in Fig. 7B
Fig. 8A is a cross-sectional view of an end termination on a third multi-layer capacitor chip body (Chip 5) coated with a 53% silver content paste (Paste A) according to an embodiment of the invention; and
Fig. 8B is a cross-sectional view of an end termination on the third multi-layer chip body (Chip 5) coated with a 65% silver content paste (Paste B) according to an embodiment of the invention.

### DETAILED DESCRIPTION OF THE INVENTION

The electroconductive paste composition according to the invention is a low silver content paste composition comprising two essential components: electroconductive metal particles and an organic vehicle. While not limited to such applications, the electroconductive paste compositions of the present invention may be used for the formation of electrically conductive layers for the manufacturing of various components, such as electronic circuits (e.g., hybrid circuits) and passive components, preferably when fired in an ambient air environment.

While various ranges are recited herein, it will be understood that the recited ranges are not strictly limited to the stated maximum and minimum numerical values. Instead, the stated values are estimates to the best knowledge of the inventors and will include values within the range of equivalents of the stated values.

According to one preferred embodiment, the low content silver paste composition is used as a metallization paste for coating passive components. More particularly, the electroconductive paste composition is preferably suited for use in the manufacturing of disc and multilayer capacitors, chip resistors, disc and multilayer NTC and PTC thermistors, disc and multilayer varistors, resonators, multilayer PZT transducers, inductors, and multilayer ferrite beads. More preferably, the paste composition is suited for use as a capacitor end termination composition. However, it will be understood by those skilled in the art that the low silver content paste composition of the present invention can be utilized for any application requiring the formation of an electrically conductive layer or film, such as for formation of a conductor.

Each component in the electroconductive paste compositions will now be described in more detail.

The electroconductive metal particles function as an electroconductive metal in the electroconductive paste compositions. One type of electroconductive particles is preferably present in the composition in the form of coated metal powder, coated metal flake, or combinations thereof. The particle morphology of the coated metal powder is not subject to any particular limitation. For example, the coated metal particles may be spherical, amorphous, or quasi-spherical in shape. More preferably, the electroconductive particles are present in the form of silver coated metal powder, silver coated metal flake, or combinations thereof. The metal powder/flake is preferably selected from the group consisting of aluminum, copper, nickel, and tin.

More preferably, the coated metal powder/flake is a silver coated copper powder/flake. The silver content of the silver coated copper powder/flake is preferably 10% to 50% by weight based on a total weight of the silver coated copper powder/flake. More preferably, the silver content of the silver coated copper powder/flake is preferably 20% to 30% by weight based on a total weight of the silver coated copper powder/flake. Most preferably, the silver coated copper powder/flake is a 30% silver coated copper powder/flake. That is, most preferably, the silver content of the silver coated copper powder/flake is 30% by weight based on a total weight of the silver coated copper powder/flake.

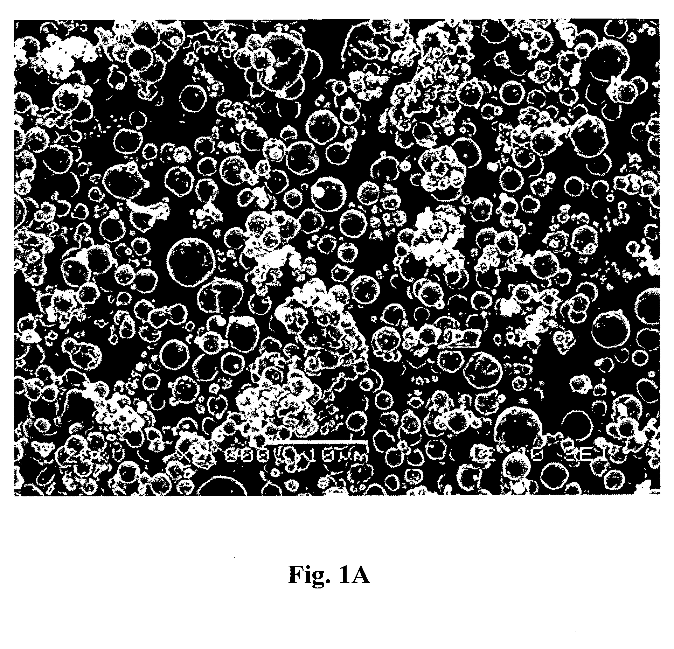

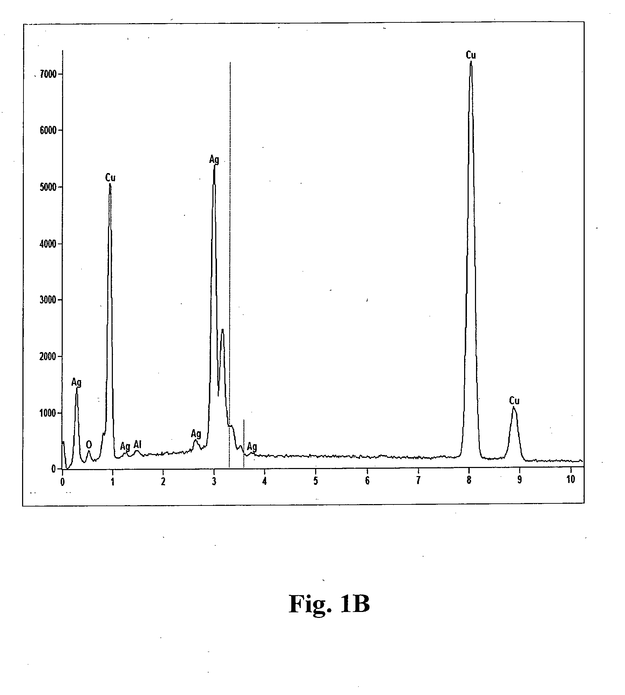

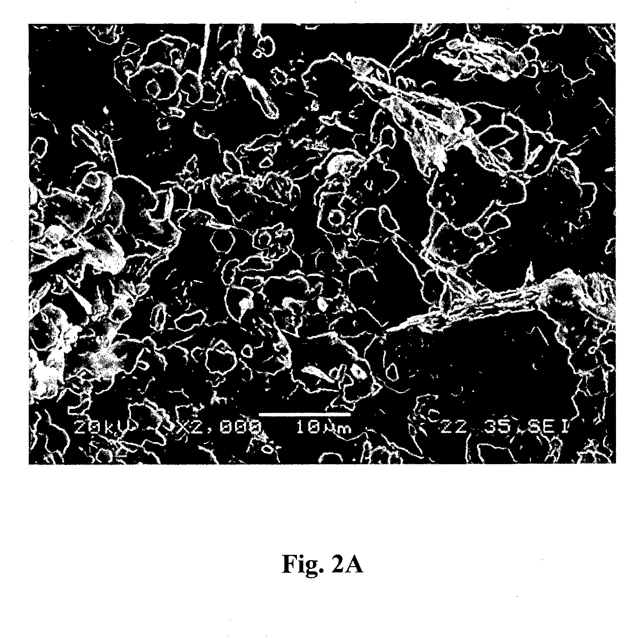

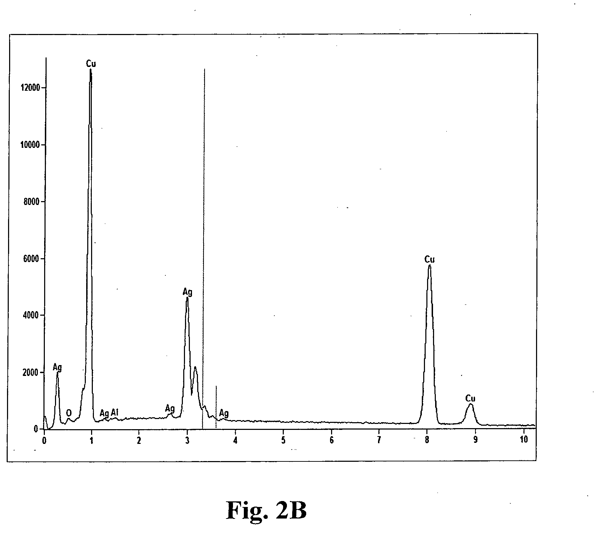

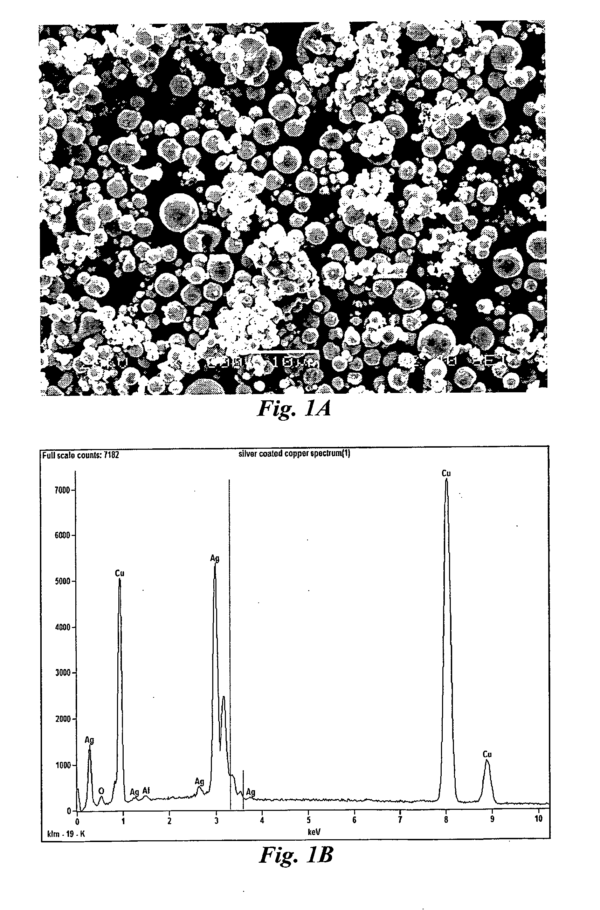

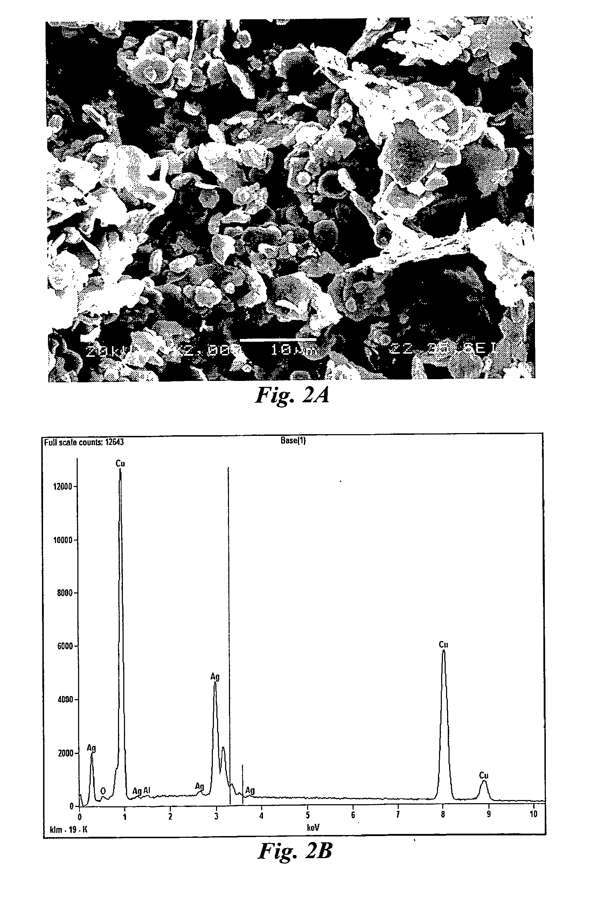

A SEM photograph and an energy-dispersive X-ray spectroscopy (EDX) spectrum scan of a 30% silver coated copper powder are shown in Figs. 1A and 1B, respectively. A SEM photograph and an energy-dispersive X-ray spectroscopy (EDX) spectrum scan of a 30% silver coated copper flake are shown in Figs. 2A and 2B, respectively.

The silver coated metal powder/flake is preferably present in a paste composition in an amount of 10% to 70 % by weight based on the total weight of the composition. More preferably, the silver coated metal powder/flake is present in the composition in an amount of 15% to 40% by weight based on the total weight of the composition. The particle size of the silver coated metal powder/flake is not subject to any particular limitation. However, the silver coated metal powder/flake preferably has average particle sizes of approximately 1 to 10 microns and, more preferably, approximately 1 to 5 microns. Unless otherwise indicated herein, all particle sizes stated herein are d₅₀ particle diameters measured by a laser diffraction analyzer or a sedigraph which determines particle size by sedimentation analysis. As well understood by those in the art, the d₅₀ diameter represents the size at which half of the individual particles (by weight) are smaller than the specified diameter.

In preferred embodiments, the paste compositions also preferably include electroconductive particles in the form of uncoated (i.e., pure) metal powder/flake. The uncoated metal powder/flake particles are preferably present in the composition in an amount of 0% to 70 % by weight based on the total weight of the composition. More preferably, the uncoated metal powder/flake particles are present in the composition in an amount of 30% to 65% by weight based on the total weight of the composition. The particle size of the uncoated metal powder/flake is not subject to any particular limitation. However, the uncoated metal powder/flake preferably has average particle sizes of approximately 1 to 10 microns and, more preferably, approximately 1 to 5 microns. Such particle sizes ensure suitable sintering behavior and spreading of the electroconductive pastes when applied to a metal or ceramic substrate, as well as appropriate contact formation and conductivity of the resulting electrically conductive layer.

In preferred embodiments, the uncoated metal powder/flake is uncoated silver powder/flake. However, it is also within the scope of the invention to utilize other electroconductive metals in place of or in addition to silver powder/flake, such as copper powder and/or copper flake, as well as mixtures containing silver, copper, gold, palladium, and/or platinum. Alternatively, alloys of silver or these other metals may also be utilized as the electroconductive metal.

The particular organic vehicle or binder is not critical, and may be one known in the art or to be developed for this type of application. A suitable organic vehicle provides stable dispersion of solids, appropriate viscosity and thixotropy for paste deposition, appropriate wettability of the substrate and the paste solids, a good drying rate, and good firing properties. For example, a preferred organic vehicle contains a resin and a solvent. Preferred examples of the resin are thermoplastic resins, such as acrylics, rosins and rosin esters, hydrocarbon resins, and polyketones. Other preferred examples of the resin are polysaccharide resins, such as ethyl cellulose and ethyl hydroxethyl cellulose. Preferred examples of solvents include terpene hydrocarbons, such as alpha terpineol, terpinol and pine oils; primary alcohols, such as texanol and tridecyl alcohol; glycol ethers, such as diethylene glycol n-butyl ether, diethylene glycol methyl ether, diethylene glycol ethyl ether, ethylene glycol n-butyl ether, dipropylene glycol methyl ether, and tripropylene glycol methyl ether; esters, such as diethylene glycol monobutyl ether acetate, ethylene glycol monobutyl ether acetate, diethylene glycol monoethyl ether acetate, ethylene glycol monoethyl ether acetate, ethylene glycol monobutyl ether acetate, propylene glycol monomethyl ether acetate, and dibasic esters; and combinations thereof.

The optimum concentration of the organic vehicle in the paste composition is dependent upon the method by which the paste will be applied to a substrate or passive component and the specific organic vehicle used. Preferably, the organic vehicle (i.e., the solvent and resin) is present in the electroconductive paste composition in an amount of 10% to 30% by weight based on the total weight of the composition. More preferably, the organic vehicle is present in the electroconductive paste composition in an amount of 15% to 25% by weight based on the total weight of the composition.

In preferred embodiments, the electroconductive paste compositions include glass powder (glass particles). The glass powder functions as an inorganic binder in the electroconductive paste compositions and acts as a transport medium to deposit the conductive metal (e.g., silver) onto the substrate during firing. The glass system is important for controlling the size and depth of the silver deposited onto the substrate. The specific type of glass is not critical provided that the glass can give the desired properties to the paste compositions. Preferably, the type of glass utilized is one that can be subjected to working or firing temperatures of 300°C to 900°C. More preferably, the type of glass utilized is one that can be subjected to working or firing temperatures of 300°C to 800°C. The glass may also be a lead-based glass or a lead-free glass. An example of a preferred lead-based glass is lead borosilicate. Examples of preferred lead-free glasses include bismuth borosilicate and zinc borosilicate. It will be understood that other lead-based and lead-free glasses would also be appropriate. The glass powder preferably has a particle size of about 1 to about 10 microns, and more preferably, of about 1 to about 5 microns. Preferably, the glass powder is contained in the compositions in an amount of 0% to 10 weight %, and more preferably, of 2% to 5% by weight based on the total weight of the paste composition. Such amounts provide the compositions with appropriate adhesive strength and sintering properties. It is also within the scope of the invention to include additives in the paste compositions. For example, it may be desirable to include rheology/viscosity modifiers, surfactants, stabilizers, dispersants, and/or other common additives, alone or in combination in the electroconductive paste compositions. Preferred examples of rheology/viscosity modifiers include wetting and dispersing agents and thixotropic agents. Many such additives are well known in the art. The additives are preferably present in the electroconductive paste composition in an amount of 0% to 10% by weight based on the total weight of the composition. More preferably, the additives are present in the electroconductive paste composition in an amount of 0.5% to 2% by weight based on the total weight of the composition. However, it will be understood by those skilled in the art that the amounts of such additives, if included, may be determined by routine experimentation depending on the properties of the electroconductive paste that are desired.

In preferred embodiments, the composition also includes metal oxide powders. Preferred examples of the metal oxide powders include, without limitation, SiO₂, Al₂O₃, Bi₂O₃, B₂O₃, CuO, Cu₂O MnO₂, SnO₂, ZnO, ZrO₂, and combinations thereof. The metal oxide powder is preferably present in the electroconductive paste composition in an amount of 10% by weight or less based on the total weight of the composition. More preferably, the metal oxide powder is present in the electroconductive paste composition in an amount of 1% to 10% by weight based on the total weight of the composition. Most preferably, the metal oxide powder is present in the electroconductive paste composition in an amount of 1% to 5% by weight based on the total weight of the composition.

It will be understood by those skilled in the art that the relative proportions and ratios of each of the separate materials of the low content silver paste composition are determined by the intended end use of the paste composition. Preferably, the total silver content of the paste composition is 35% to 70% by weight based on the total weight of the paste composition. More preferably, the total silver content of the paste composition is 50% to 70% by weight based on the total weight of the paste composition. The total solids content of the paste composition, that is the total content of the inorganic components, is preferably 70% to 90% by weight based on the total weight of the paste composition, and more preferably, 75% to 85% by weight based on the total weight of the paste composition. The total liquids content of the paste composition, that is the total content of the organic components, is preferably 10% to 30% by weight based on the total weight of the paste composition, and more preferably 15% to 25% by weight based on the total weight of the paste composition.

Because silver coated metal powder/flake is a primary source of the electroconductive metal particles of the paste composition, the composition has a relatively low overall silver content, while maintaining a relatively high total solids content. Thus, because the low silver content paste composition still comprises a relatively high total solids content, the paste composition exhibits electrical properties and adhesion strength similar to those of pastes having higher silver contents.

The electroconductive paste composition may be prepared by any method for preparing a paste composition known in the art or to be developed. Preferably, the electroconductive paste composition is prepared by blending or mixing the paste components, such as with a mixer, and then passing the mixture through a three roll mill to make a dispersed uniform paste.

In one embodiment, the liquid and non-metal powder components are weighed out and then mixed together in a container. The container is then subjected to agitation and/or mixing, and the metal components are slowly added while the contents of the container are blended, until the powders are thoroughly dispersed into a paste form. A triple roll mill with scheduled pressure and/or gap settings is then used to shear the paste mixture into a uniform homogeneous product. A fineness of grind (FOG) or Hegman gauge can then be used to measure the sizes of the paste particles, and to determine when the paste particle sizes meet the desired sizes. The preferred paste particle sizes are less than about 15 microns, and more preferably less than about 10 microns. More preferably, the paste particle sizes are less than about 12 microns, and most preferably less than about 6 microns.

The paste composition can be milled repeatedly until the desired particle sizes are achieved. After the final mill pass, the paste composition is collected and blended at least one more time. Next, the viscosity and rheological properties of the paste composition are measured using a viscometer and/or a rheometer. The solids content of the paste composition is also preferably measured. Depending on the results of these measurements, various additives may be added to the paste composition to adjust the viscosity, rheology, solids content and the like of the composition to be within the desired ranges.

A method of utilizing and applying the electroconductive paste compositions for formation of a conductive film or layer will now be described in more detail.

The paste composition is initially applied to a surface of a metal or ceramic substrate or a component, such as a passive component, by any appropriate application method. Examples of appropriate application methods include brushing, dipping, screen printing, spraying, roller coating or any technique used for application of thick film pastes. Preferred embodiments include utilizing the paste composition as a capacitor end termination composition, such that application of the composition occurs by dipping an end of a capacitor chip into the paste composition. However, it will be understood by those skilled in the art that the conductive paste composition of the present invention can be used in any type of application that requires an electrically conductive paste, such as for formation of a conductor or an electrode, or a metallization paste for coating of a passive component.

In one embodiment, after the paste has been applied to a substrate surface or component, the coated substrate or component is preferably dried at relatively low temperatures to drive off the solvents contained in the paste. Any appropriate drying method may be utilized. Preferred examples of the drying method include air drying, drying in a box furnace, or drying in a belt dryer. Preferably, the coated substrate or component is dried at a temperature of approximately 150°C for 10 to 20 minutes. It will be understood by those skilled in the art that the drying times and temperatures may be increased or decreased depending upon the thickness of applied paste. The coating and drying process may be performed multiple times, depending upon the processing needs, such as for formation of a multilayer structure.

Next, the coated substrate or component is passed through a furnace for sintering or firing. If the initial drying process has been performed, the paste will be in a partially dried state prior to sintering. Otherwise, the paste coated on the substrate will be in a substantially wet state. The furnace may be any type of furnace known in the art or to be developed. Preferably, the coated substrate or component is subjected to relatively high firing temperatures in a standard ambient air environment. Preferably, the furnace may be a continuous, box, belt, oscillatory or any type of furnace or kiln that can achieve a peak firing temperature of up to approximately 1,000°C in an ambient air environment. More preferably, the coated substrate or component is fired in an ambient air environment in a furnace at peak firing temperatures of 400°C to 900°C. Even more preferably, the coated substrate or component is fired in a substantially pure air environment in a furnace at peak firing temperatures of 450°C to 850°C. Preferably, the coated substrate or component is fired at the peak temperature for 5 to 10 minutes.

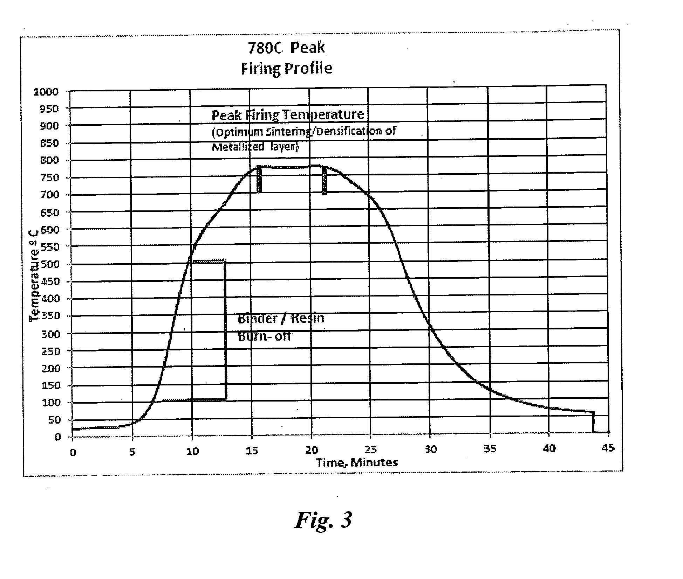

A preferred firing curve for a peak firing temperature of 780°C is depicted in Fig. 3. While the environment within the furnace is preferably a pure standard air environment, it will be understood by those skilled in the art that the furnace environment may contain nominal amounts of other gases which will not negatively impact the electrical and adhesion properties of the resulting fired paste layer. It will also be understood by those skilled in the art that the specific peak firing temperature and firing durations utilized will vary depending upon the particular compositional make-up of the conductive paste and the material of the underlying substrate or component.

After the firing or sintering step, the above-described paste application, drying and firing steps may be repeated depending upon the processing needs, such as for formation of multilayer structures. Optionally, the resulting conductive layer or end termination may be soldered with a lead or a lead-free solder. The soldering can be done by hand, by dipping, and/or by a solder paste reflow method. Examples of appropriate lead solders include lead, tin/lead, tin/lead/silver, tin/lead/bismuth, lead/silver, indium/lead, or lead/indium/silver alloys. Preferred examples of lead solders include Sn62Pb36Ag2 and Sn63Pb37. Examples of appropriate lead-free solders include tin/silver, tin/silver/copper, tin/antimony, bismuth/tin, bismuth/tin/silver, indium/silver, or indium/tin alloys. Preferred examples of lead-free solders include Sn96.5/Ag3.0/Cu0.5 and Sn95/Ag5.

The resulting conductive layer or film may also be electroplated via electroless (chemical) or electrolytic (electrical) plating with solutions of nickel, tin, copper, gold, silver, palladium, or alloys thereof.

The plated conductive layer can also be soldered with any of the aforementioned examples of lead and lead-free solders and, more preferably, with any of the aforementioned preferred examples of lead and lead-free solders.

### Examples

Four exemplary different electroconductive pastes were prepared by combining 30% silver coated copper powder with silver flake, an organic vehicle, a rheology modifier, a solvent, glass powder and/or metal oxide powder in the proportions shown in Table 1 below:

**Table 1: Formulations for Pastes A and B**

| Raw Material | Paste A | Paste B | Paste C | Paste D |
|---|---|---|---|---|
| 30% Ag Coated Cu Powder | 35.0% | 20.0% | 20.0% | 20.0% |
| Ag Flake | 42.5% | 59.0% | 59.0% | 59.0% |
| Organic Vehicle | 13.5% | 12.0% | 13.0% | 13.0% |
| Solvent | 5.0% | 5.0% | 4.0% | 4.0% |
| Rheology Modifier | 1.0% | 1.0% | 0.0% | 0.0% |
| Metal Oxide Powder | 0.0% | 0.0% | 1.0% | 1.0% |
| Glass Powder | 3.0% | 3.0% | 3.0% | 3.0% |

All percentages are weight percentages based on the total weight of the paste composition. The organic vehicles for both Pastes A and B included alpha terpineol, texanol, rosin ester resin, methacrylated acrylic resin, and ethyl cellulose. The rheology modifier used to make both Pastes A and B was a thixotropic agent. The solvent used to make both Pastes A and B was alpha terpineol. The glass powder used to make both Pastes A and B was a lead-free glass powder, and more specifically, bismuth-zinc-borosilicate glass powder. The metal oxide powder used to make Paste C was bismuth trioxide, while the metal oxide powder used to make Paste D was copper(II) oxide (or cupric oxide).

For each paste, the materials were mixed together and formed into a paste by processing on a three-roll mill. The total silver content of Paste A was 53% by weight based on the total weight of the paste composition. The total silver content of each of Pastes B, C and D was 65% by weight based on the total weight of the paste composition.

Five different commercially available capacitor chips (Chip Bodies 1-5) were then dipped into each of Pastes A and B to form exemplary end terminations. Chip Bodies 2 and 5 were also dipped into each of Pastes C and D to form other exemplary end terminations. Chip Body 1 was a 0805 size multi-layer (X7R) capacitor; Chip Body 2 was a 0805 size multi-layer varistor; Chip Body 3 was a 1206 size multi-layer inductor; Chip Body 4 was a 0603 multi layer (COG) capacitor; and Chip Body 5 was a 1206 size multi-layer (X7R) capacitor.

Each coated Chip Body 1-5 was then dried at a temperature of approximately 150°C for 10 to 20 minutes, and subsequently fired in a furnace in a standard ambient air environment at the peak firing temperatures indicated in Table 2 below. Then, each Chip Body 1-5 was electrolytically plated with a layer of nickel followed by a layer of tin. Finally, each Chip Body 1-5 was cross-sectioned and tested for properties such as coverage and adhesion/wettability.

The plated adhesion of each Chip Body 1-5 was tested by soldering a lead to each end termination, performing a pull test, and measuring the pounds of force required to break the bond between the sintered paste and the underlying component. The data for the Chip Bodies 1-5 prepared using Pastes A, B, C and D are shown Table 2 below.

**Table 2: Plated adhesion of Chip Bodies 1-5 at the respective peak firing temperatures**

| **Chip Body** | **Peak Firing Temp.** | **Paste A (lbs.)** | **Paste B (lbs.)** | **Paste C (lbs.)** | **Paste D (lbs.)** |
|---|---|---|---|---|---|
| 1 | 650°C | 4.5 (TF) | 4.4 (TF/CF) | - | - |
| 2 | 780°C | 4.3 (TF) | 1.6 (TF) | 7.9 (TF/CF) | 7.6 (TF/CF) |
| 3 | 780°C | 6.9 (TF/CF) | 6.6 (TF/CF) | - | - |
| 4 | 700°C | 5.2 (TF) | 5.5 (TF) | - | - |
| 5 | 770°C | 5.0 (TF) | 5.4 (TF/CF) | 4.2 (CF) | 2.5 (CF) |

| | | | | | |
|---|---|---|---|---|---|
| TF - Termination Failure CF - Ceramic Failure | | | | | |

All of the chip bodies, with the exception of Chip Body 2 coated with Paste B, achieved an adhesion strength of greater than 4 pounds. Thus, even though each of Pastes A, B, C and D has a relatively low silver content, end terminations formed using each of the pastes still exhibit adhesion strengths similar to those of pastes having higher silver contents.

The two failure mode types listed are ceramic failure (CF) and termination failure (TF). The ceramic failure mode, commonly termed cohesive failure, was achieved by Chip Body 2 when coated with Paste B, by Chip Body 2 when coated with either Paste C or D, by Chip Body 3 when coated with either Paste A or B, and by Chip Body 5 when coated with one of Paste B, C or D. The ceramic failure mode is the most desirable failure mode and indicates that part of the substrate is pulled or removed at the break point. The termination failure mode indicates that only the termination was pulled or removed at the break point. While less desirable than the ceramic failure, this failure mode type may still be considered acceptable, depending on the adhesion strength obtained, the type and size of the chip body, and ultimately, whether the chip body meets the customer specifications.

The capacitance of Chip Bodies 2 and 5, terminated with Paste A, B, C or D, was also measured and compared against the reference capacitance value or range of the respective uncoated chip. The capacitance of ten chips from each of the terminated Chip Bodies 2 and 5 (i.e., ten chips of each of Chip Bodies 2 and 5 terminated with Paste A, ten chips of each of Chip Bodies 2 and 5 terminated with Paste B, ten chips of each of Chip Bodies 2 and 5 terminated with Paste C, and ten chips of each of Chip Bodies 2 and 5 terminated with Paste D) was measured and then averaged. The results of these measurements are shown in Table 3 below.

**Table 3: Average capacitance values of Chip Bodies 2 and 5**

| **Chip Body** | **Reference Capacitance** | **Paste A** | **Paste B** | **Paste C** | **Paste D** |
|---|---|---|---|---|---|
| 2 | 400 pf | 390.2 pf | 404.9 pf | 390 pf | 401 pf |
| 5 | 90 - 110 nf | 97.0 nf | 97.4 nf | 96.7 nf | 94.7 nf |

The capacitance difference between the reference value and Chip Body 2 terminated with Paste A was 2.46%. The capacitance difference between the reference value and Chip Body 2 terminated with Paste B was 1.23%. The capacitance difference between the reference value and Chip Body 2 terminated with Paste D was 0.25%. The capacitance of Chip Body 5 terminated with Paste A, B, C or D fell within the targeted range. Thus, even though Pastes A and B have a relatively low silver content, Chip Bodies terminated with each paste still exhibit electrical properties similar to those of pastes having higher silver contents.

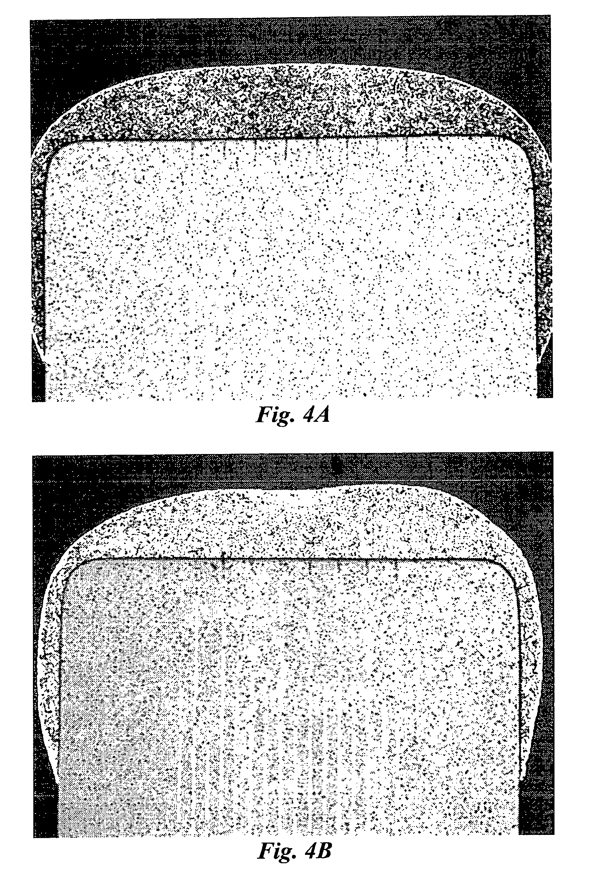

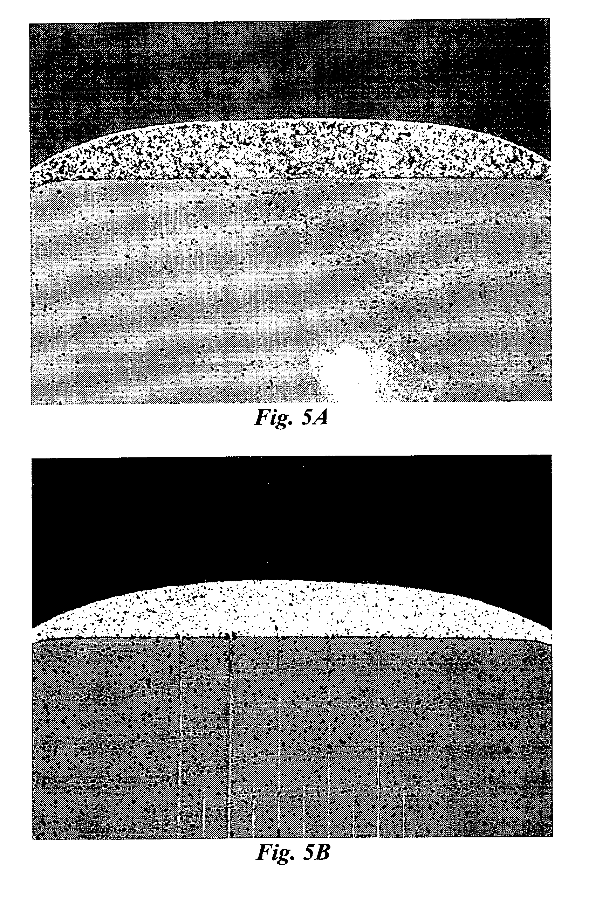

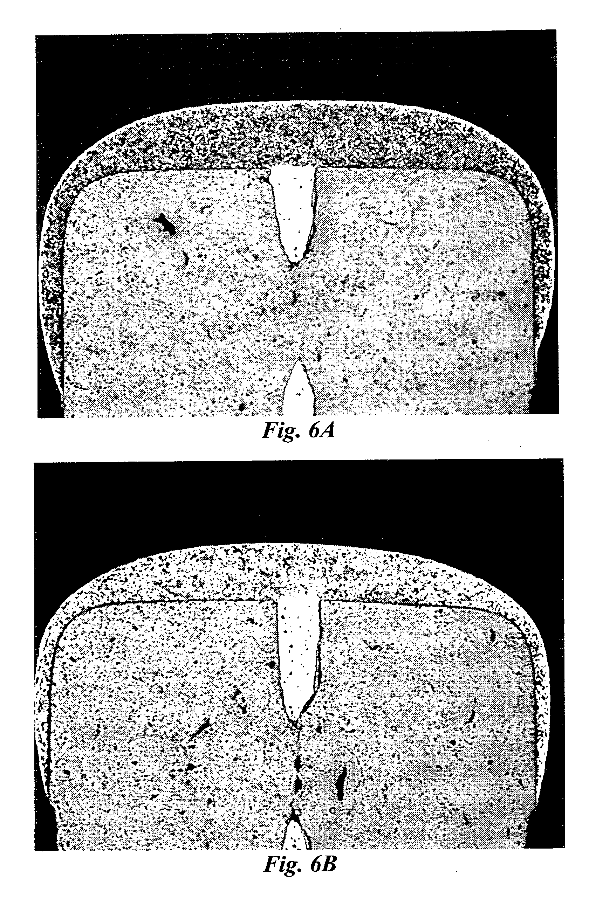

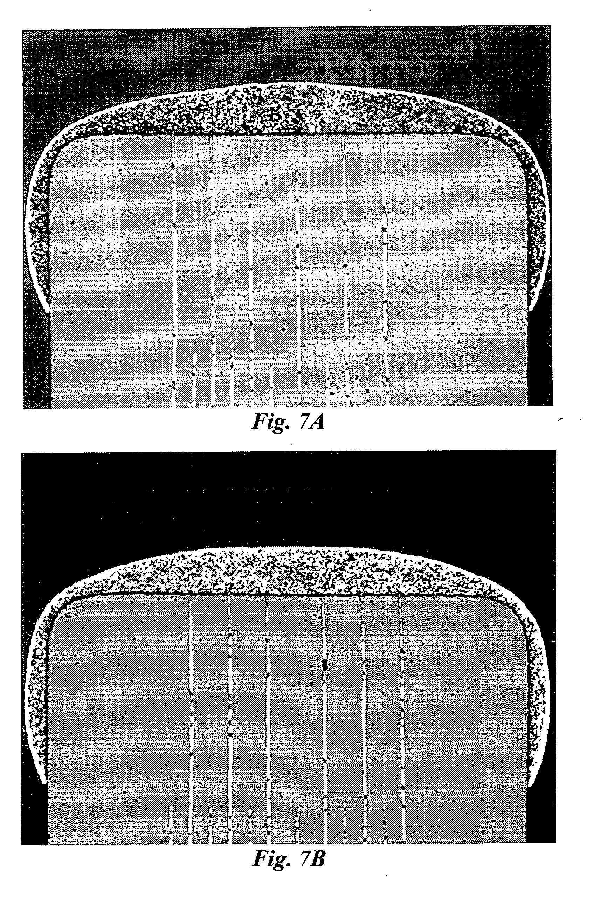

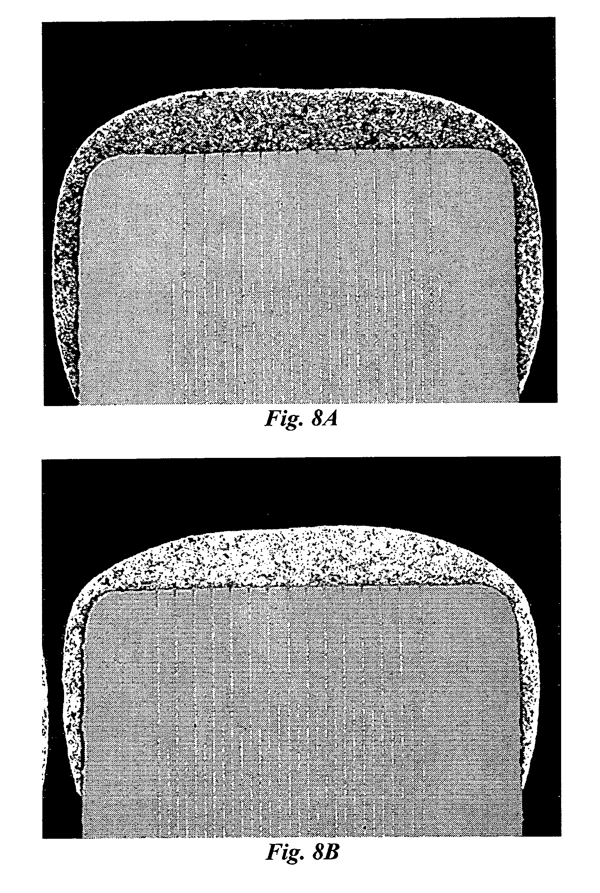

Cross-sectional views of Chip Body 1 terminated with Paste A and Paste B are depicted in Figs. 4A-4B, respectively. Cross-sectional views of Chip Body 2 terminated with Paste A and Paste B are depicted in Figs. 5A-5B, respectively. Cross-sectional views of Chip Body 3 terminated with Paste A and Paste B are depicted in Figs. 6A-6B, respectively. Cross-sectional views of Chip Body 4 terminated with Paste A and Paste B are depicted in Figs. 7A-7B, respectively. Cross-sectional views of Chip Body 5 terminated with Paste A and Paste B are depicted in Figs. 8A-8B, respectively.

It can be seen from these cross sectional views that substantially no gaps or voids are present at the interface between the chip component and the sintered paste, indicating that Paste A and Paste B both achieved superior wetting or bonding to the underlying chip component. A thick termination layer (apex and corner) is also achieved with Paste A and B. Preferably, the apex of the thickness of the end termination formed by the sintered paste is 30 to 100 micrometers, and more preferably 40 to 70 micrometers.

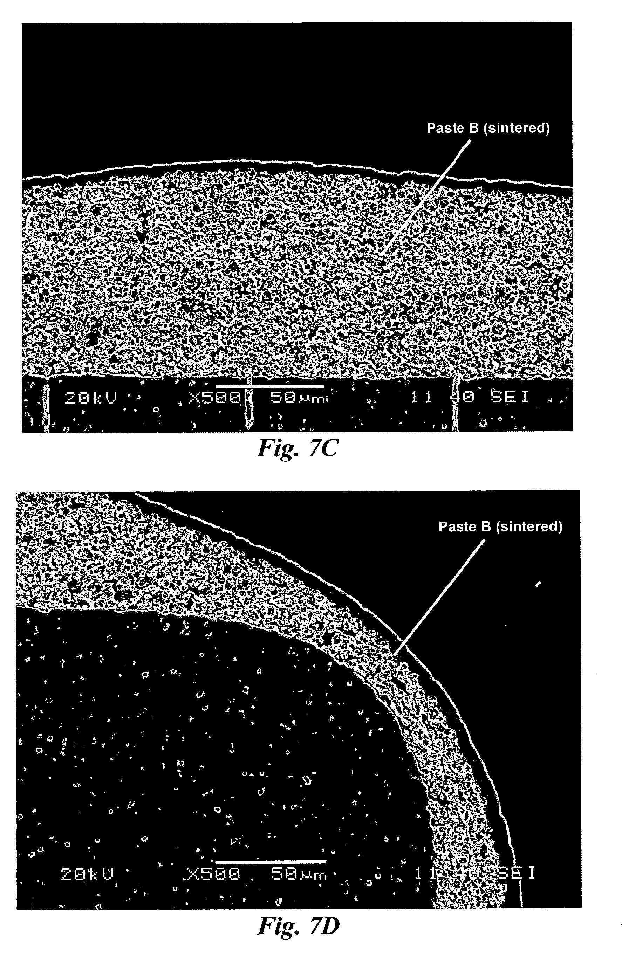

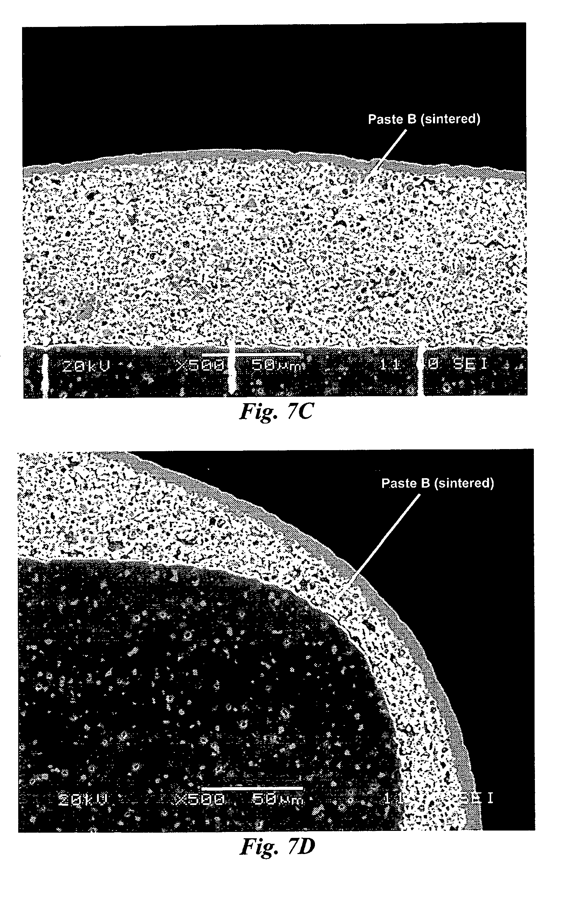

Fig. 7C and Fig. 7D are SEM photographs of termination Paste B fired on Chip Body 4. This is a clear representation of the sintering behavior as well as the fired thickness that can be achieved with the paste.

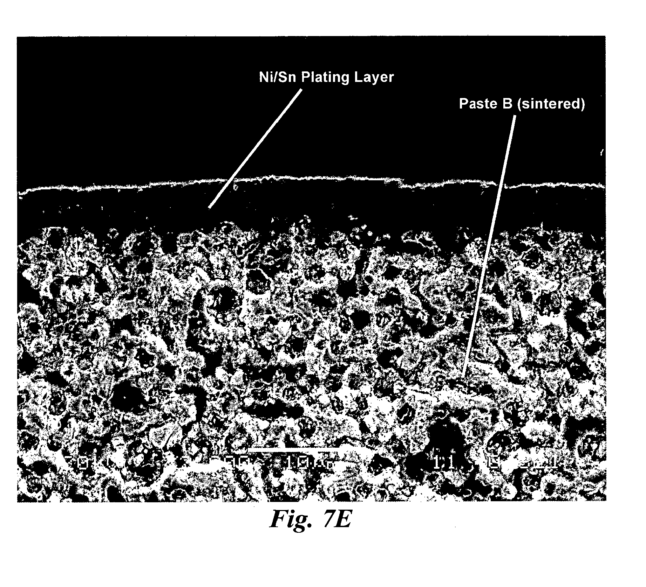

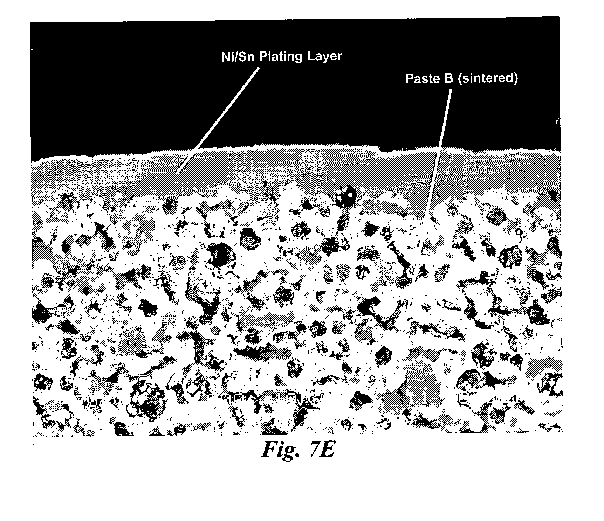

A substantially uniform and relatively thick plating layer can also be formed on the termination layer. Preferably, the thickness of the plating layer is 3 to 15 micrometers, and more preferably 5 to 10 micrometers. Fig. 7E is a SEM photograph showing the Nickel/Tin plating layer applied to Chip Body 4 terminated with Paste B.

It will be appreciated by those skilled in the art that changes could be made to the embodiments described above without departing from the broad inventive concept thereof. It is understood, therefore, that this invention is not limited to the particular embodiments disclosed, but it is intended to cover modifications within the spirit and scope of the present invention as defined by the appended claims.

## Claims

1. An electroconductive paste composition comprising:
electroconductive metal particles including at least one of silver coated metal powder and silver coated metal flake and at least one of uncoated silver powder and uncoated silver flake;
glass powder;
at least one metal oxide powder; and
an organic vehicle.

2. The composition according to claim 1, wherein the silver coated metal powder is silver coated copper powder and the silver coated metal flake is silver coated copper flake.

3. The composition according to claim 1, wherein the silver coated metal powder or silver coated metal flake comprises 10% to 70% by weight based on a total weight of the composition.

4. The composition according to claim 3, wherein the silver coated metal powder or silver coated metal flake comprises 15% to 40% by weight based on a total weight of the composition

5. The composition according to claim 1, wherein the at least one of silver powder and silver flake comprises 30% to 65% by weight based on a total weight of the composition.

6. The composition according to claim 1, wherein the organic vehicle comprises 10% to 30% by weight based on a total weight of the composition.

7. The composition according to claim 1, wherein a content of the glass powder is 2% to 10% by weight based on a total weight of the composition.

8. The composition according to claim 1, wherein a content of the at least one metal oxide powder is 1% to 5% by weight based on a total weight of the composition.

9. The composition according to claim 1, wherein the at least one metal oxide powder is selected from the group consisting of SiO₂, Al₂O₃, Bi₂O₃, B₂O₃, CuO (black), Cu₂O (red), MnO₂, SnO₂, ZnO, ZrO₂.

10. The composition according to claim 1, wherein a silver content of the silver coated metal powder or silver coated metal flake is 10% to 50% by weight based on a total weight of the silver coated metal powder or silver coated metal flake.

11. The composition according to claim 1, wherein a total silver content of the paste composition is 35% to 70% by weight based on a total weight of the composition.

12. The composition according to claim 11, wherein the total silver content of the paste composition is 50% to 70% by weight based on the total weight of the composition.

13. The composition according to claim 1, wherein a total solids content of the composition is 70% to 90% by weight based on a total weight of the composition.

14. A method of forming an end termination on a passive component, the method comprising the steps of:
(i) coating an electroconductive paste composition on a surface of the passive component, the electroconductive paste composition comprising at least one of silver coated metal powder and silver coated metal flake, at least one of uncoated silver powder and uncoated silver flake, glass powder, at least one metal oxide powder and an organic vehicle; and
(ii) firing the coated passive component in an ambient air environment at a temperature in a range of 400°C to 900°C.

15. The method according to claim 14, wherein the coated passive component is fired in a substantially pure air environment at a temperature in a range of 450°C to 850°C.

16. The method according to claim 14, wherein the silver coated metal powder is silver coated copper powder and the silver coated metal flake is silver coated copper flake.

17. A passive component having an end termination formed by the method of claim 14.

18. A termination paste composition comprising:
at least one of silver coated copper powder and silver coated copper flake in an amount of 15% to 40% by weight based on a total weight of the composition;
at least one of uncoated silver powder and uncoated silver flake in an amount of 30% to 65% by weight based on a total weight of the composition;
glass powder in an amount of 2% to 5% by weight based on a total weight of the composition; and
an organic vehicle in an amount of 10% to 30% by weight based on a to-tal weight of the composition,
wherein a total silver content of the paste composition is 50% to 70% by weight based on the total weight of the composition and a total solids content of the composition is 70% to 90% by weight based on a total weight of the composition.
